# EUROPEAN PATENT SPECIFICATION

(11) **EP 3 035 466 B1**
(45) Date of publication and mention of the grant of the patent: **17.07.2019**
(21) Application number: 15446507.4
(22) Date of filing: 15.12.2015
(51) Int. Cl.: H02G 3/12

(54) **AN INSTALLATION BOX HAVING AN INTEGRATED SWIVEL**
INSTALLATIONSGEHÄUSE MIT INTEGRIERTEM DREHTEIL
BOÎTE D'INSTALLATION AYANT UN PIVOT INTÉGRÉ

(30) Priority: 16.12.2014 SE 1451554
(43) Date of publication of application: 22.06.2016
(73) Proprietor: Schneider Electric Industries SAS, 92500 Rueil-Malmaison (FR)
(72) Inventor: BRUNBERG, Magnus, 611 50 Nyköping (SE)
(74) Representative: Groth & Co. KB

(56) References cited:
- WO-A1-2009/097845
- DE-A1- 4 137 421
- DE-A1-102009 056 643
- FR-A1- 2 766 025
- GB-A- 2 117 573
- GB-A- 2 426 638

## Description

### Technical Field

The present invention relates to installation boxes for electrical applications and particularly to the mounting of such installation boxes. Particularly, the invention relates to embedded boxes.

### Background of the Invention

In, for instance, the document EP 1775815 with, among others, Legrand France as applicant, an installation box is shown provided with a mounting device to mount the box in a wall. The mounting device comprises a threaded tightening screw on which a clamping lug can be moved up and down along the outer edge of the box so as to, upon rotation of the tightening screw, clamp the box in a hole in a wall plate. By the fact that the clamping lug can be screwed down into an inserted lower position, the box can be inserted into the hole and by manoeuvring the tightening screw, the clamping lug can be displaced along the outside of the box and in doing so be clamped against the inside of the wall plate.

Such a mounting device requires a plurality of loose and movable parts, which should interact to provide a mounting of the installation box.

The manufacturing cost of such an installation box increases with regard to how many retrofit loose parts being required for the box. In EP 1775815, two extra retrofit movable parts are present, *viz.* the clamping lug and the tightening screw, the tightening screw of which in addition should be movable in a pendulum movement to allow a retracted position for the clamping lug.

By the mounting device comprising a thread, the function may also fail if, for instance, a tilt of the clamping lug makes that the threads of the tightening screw are deformed.

Similar mounting devices for installation boxes are also seen in the documents DE 7524603U and DE 19922212, which mounting devices also require retrofit loose and movable parts for the mounting function of the box.

The prior art documents DE 102009056643, WO 2009/097845, GB 2117573, FR 2766025, GB 2426638 and DE 4137421 shows swivel arrangements having a pivot in or in the vicinity of the side wall of an installation box for fixing the box into a sheet of material.

### The Object of the Invention

The object of the invention is to allow a simple and fast mountable and thereby more cost-effective installation box by the fact that it does not comprise any retrofit parts.

The object of the invention is also that the installation box according to the invention should be possible to be integrally manufactured.

The object of the invention is further to present such an installation box that allows the installation of the box in boards of defined thicknesses.

In addition, the object of the invention is to also present such an installation box that allows the installation of the box optionally in one of two boards each of which having a defined thickness.

### Summary of the Invention

By the present invention, as the same appears in the independent claim, the above-mentioned objects are met wherein said disadvantages have been eliminated. Suitable embodiments of the invention are defined in the dependent claims.

The invention concerns an installation box intended for electrical installations. The box comprises at least one side wall the upper edge of which is provided with a bearing fold. The side wall may be a wall in a single box as well as a double box. The side wall is provided with mounting columns, to which the electrical inserts are attached by screws. The side wall is further provided with lead-throughs for the electrical cables to the box. The bottom of the box is connected to the lower portion of the side wall. The box is provided with at least two swivels which individually are provided with a bearing end and an operating end. Each swivel is integrated with the side wall of the box by a first pivot on which the swivel is rotatable at least between a mounting position and a locking position. The integration consists of box, swivel, and pivot being integrally formed as a unit, preferably by injection moulding. The pivot is placed at a distance from said two ends of the swivel so that the swivel performs as a lever around said pivot. The pivot is oriented parallel to the upper edge of the side wall. The advantages of the invention are that the entire installation box can be integrally injection-moulded.

In the invention, each swivel is provided with a locking device for the locking up of the respective swivel in a bearing position wherein the bearing end of the swivel is directed principally 90° outward from said side wall. In this position, the bearing end upon mounted box is pressed against the inner surface of a mounting board, which preferably is an inner surface of a wall board.

In one embodiment of the invention, the locking device comprises a first lock means interacting with at least the operating end of the first swivel and, by means of a snap-in function, arranged to interact for the locking of the swivel in said bearing position. In this embodiment, the second lock means may be defined as the operating end of the swivel adapted to the first lock means. Within the scope of the invention, the lock means may appear in various ways, which will be clear from the embodiments described in the detailed description.

In one embodiment of the invention, the second lock means is placed on the operating end of the second swivel.

In one embodiment of the invention, the first lock means on the operating end of the first swivel comprises two elastic projections, which are stretchable to be inserted under a respective lock edge of said first lock means.

In one embodiment of the invention, the second lock means is placed in said bottom and is provided with at least one snap edge formed to interact with the first lock means of each swivel. Thus, in this embodiment, the second lock means is a part of the bottom of the installation box.

In one embodiment of the invention, the second lock means is formed with a plurality of snap edges oriented in the direction of travel of the respective swivel so that the operating end of a swivel can be locked in several steps. Also in this embodiment, the snap edges are integrated with the bottom of the box.

In one embodiment of the invention, the snap edges of the second lock means are oriented in a stepped way in the bottom of the box. This means that the box can be clamped differently tightly in the mounting board by pressing the operating end of the swivel differently far down toward the bottom of the box upon the mounting.

In the invention, the respective operating end of the swivels is located flush with the bottom of the box and interacts with the remaining bottom of the box into a whole bottom when the swivels are situated in the locking position. Thus, the swivel ends are a part of the bottom of the box.

In one embodiment of the invention, the portion of the respective operating end of the swivels that is situated closest to said pivot is located flush with the side wall of the box and interacts with the remaining side wall of the box into an entire side wall when the swivels are situated in the locking position. Correspondingly, the swivel ends are a part of the wall of the box.

In a combination of these two embodiments, the swivel ends are a part of both the bottom and side wall of the box.

In one embodiment of the invention, the respective bearing end of the swivels is provided with a mounting spacer. This mounting spacer means a possibility of using the same box for, on one hand, a thin mounting plate, for instance with a thickness in the interval of 10-14 mm, and on the other hand for a thick mounting plate, for instance with a thickness in the interval of 23-27 mm.

In one embodiment of the invention, the mounting spacer is integrated with the swivel by a second pivot on which the mounting spacer is rotatable between a depth position and a shallow position. The depth position means that the mounting spacer is inactive, the box being mounted in a thick mounting plate while the shallow position means that the mounting spacer is active and the box is mounted in a thin mounting plate.

In one embodiment of the invention, said second pivot is parallel to said first pivot. This embodiment means that the rotations of both the swivel and the mounting spacer into a respective active position are made in the same direction and around parallel axes.

In one embodiment of the invention, the mounting spacer can be attached by snap action in the shallow position. The mounting spacer is, in this connection, provided with a protuberance having an edge, which is snapped down into a groove in the bearing end of the swivel situated near the first pivot. In this connection, the second pivot is situated at the outermost edge of the bearing end.

Further fields of application for the invention are thermal shielding light mounting and LED installations in walls or ceilings.

### Brief Description of the Drawings

Now, the invention will be described in more detail, references being made in connection with the accompanying drawing figures.
- Figure 1: shows a side view of an installation box according to a first embodiment of the invention with swivels in both a locking position and a dashed mounting position.
- Figure 2: shows the installation box in Figure 1 from above.
- Figure 3: shows a section A-A through the installation box according to Figure 2 with the operating ends of the swivels in a first lock-up position.
- Figure 4: shows a section through the installation box according to Figure 1 with one of the swivels in a first locking position and the second swivel in an alternative locking position.
- Figure 5: shows a partial enlargement from Figure 3.
- Figure 6: shows a partial enlargement from Figure 4.
- Figure 7: shows a further partial enlargement from Figure 3.
- Figure 8: shows a section through the installation box in Figure 1 with the swivels in the mounting position.
- Figure 9: shows an enlargement from Figure 8.
- Figure 10: shows a perspective view of an installation box according to a second embodiment according to the invention in a mounting position.
- Figure 11: shows a top view of the installation box according to Figure 10.
- Figure 12: shows a cross-section from Figure 11.
- Figure 13: shows an enlargement from Figure 12.
- Figure 14: shows a perspective view of the installation box according to Figure 10 in a locking position.
- Figure 15: shows a top view of the installation box according to Figure 14.
- Figure 16: shows a cross-section from Figure 15.
- Figure 17: shows an enlargement from Figure 16.

### Description of the Invention

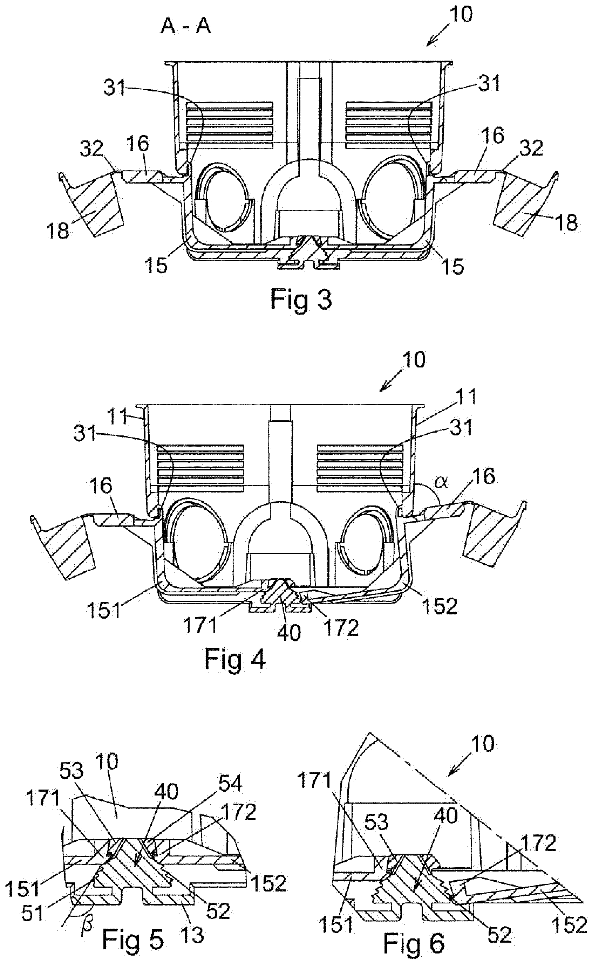

In the section views according to Figures 3-9, section indications have been made for the most relevant parts in order not to make the figures indistinct.

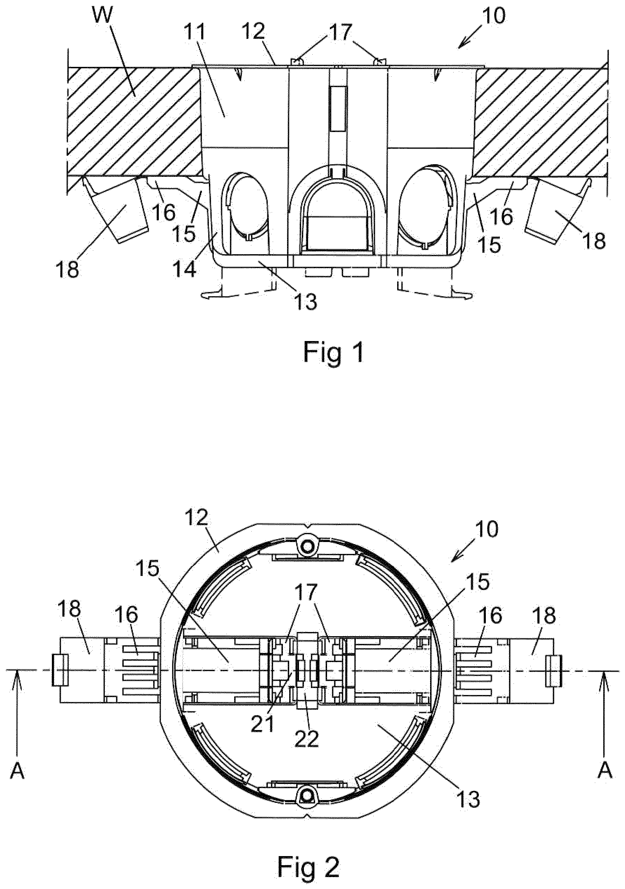

Figure 1 shows a first embodiment of an installation box 10 for electrical installations, preferably mounted in a hole in a wall board W. The installation box 10 is provided with at least one side wall 11 the upper edge of which is provided with a bearing fold 12. The installation box is further provided with a bottom 13 connected to the lower edge 14 of the side wall 11. Furthermore, the installation box 10 is provided with at least two swivels 15, which individually are provided with a bearing end 16 and an operating end 17. In the embodiment illustrated, each swivel is provided a mounting spacer 18. It should be emphasized that Figure 1 shows the swivels in a locking position and a mounting position marked with dashed lines. The operating ends 17 of the swivels 15, which are marked in the figure, originate from the mounting position, i.e., the rotated position in the figure wherein the mounting spacers 18 of the swivels are marked with dashed lines.

Figure 2 shows the installation box 10 from above with its bearing fold 12 and its bottom 13. The figure also shows the two swivels 15 mounted opposite each other in the wall of the installation box with the respective bearing end 16 and operating end 17 of the swivels. The outer edge of the bearing end 16 of each swivel 15 is provided with the mounting spacers 18. The two operating ends 17 are lowered in the position shown so that they are located flush with the bottom 13 of the box and are in this locking position arrested in the bottom 13 of the box by snap action between a first lock means 21 on the operating end 17 of at least one of the swivels 15 and a second lock means 22, which is an integrated and fixedly connected part of the bottom 13 of the box. Said lock means constitute together the locking device of the swivels, which provides a locking of the swivels in the locking position shown both in Figure 1 and in Figure 2.

The mounting of the installation box 10 according to Figure 1 has been made by the swivels 15 having been located in their mounting positions according to the dashed lines, wherein the box 10 has been inserted through the hole of the wall board W after which the operating ends 17 of the swivels 15 have been brought against each other and pressed down to the bottom 13 of the box and there been snapped-in against the second lock means 22. Thus, the bearing ends 16 of the swivels 15 have, upon this lever movement, been jammed against the inner surface of the wall board W, wherein the box is secured in the hole of the wall board W.

The parts shown of the installation box 10 in Figures 1-2 are compression-moulded in just one moment and constitute, in doing so, continuous pieces of material.

Figure 3 shows a section through the installation box 10 with the respective swivel 15 in its locking position. Each swivel 15 is integrated with the side wall 11 of the box by a first pivot 31, each swivel 15 being rotatable at least between a mounting position in which the operating ends 17 of the swivels 15 are directed out through the opening of the box according to the position in Figure 1 and a locking position according to Figure 3, the pivot 31 being placed at a distance from said two ends 16, 17 of the swivels 15 so that each swivel works as a lever upon rotation around the respective first pivot 31. The figure also shows that each one of the swivels 15 of the embodiment shown is provided with mounting spacers 18 each one connected with the bearing end 16 of the respective swivel 15 via a second pivot 32.

Figure 4 shows the operating end 171 of the first swivel 151 snapped in place in a normal locking position in a locking device 40 while the operating end 172 of the second swivel 152 is shown snapped in place in a pressing position in the locking device 40. In the normal locking position, the bearing end 16 of the swivel 151 is directed principally 90° outward from the side wall 11 of the box 10. In the pressing position, the bearing end 16 of the swivel 152 has been further rotated around the first pivot 31 and forms an angle α in relation to the side wall of the box 10 that is smaller than 90°, i.e., forms an acute angle α with the side wall 11. Preferably, 45° < α < 90°. In Figure 4, the angle α = 80°.

Figure 5 shows in enlargement the locking device 40 for the swivels 151, 152 of the installation box 10 in a position that corresponds to Figure 3 wherein both swivels 15 are shown in the normal locking position. The locking device 40 aims at locking the swivels in relation to the installation box 10 and consists of a first lock means 51 having a first outwardly leaning and toothed side and a second lock means 52 having a second outwardly leaning and toothed side. These two leaning sides are formed with said lock means 51, 52 in the form of teeth, which, in the embodiment illustrated, are three in number on each side. The number of teeth on each side of the locking device 40 may be from 1 to 4. The sides are centrally placed in the bottom 13 of the box 10 at an angle of inclination of β in relation to the bottom 13 of the box 10. The angle of inclination β is 110° < β < 130°, preferably 120°. These leaning sides 51, 52 of the locking device aim at locking the swivels in a pressing position. However, Figure 5 shows the two operating ends 171, 172 of the swivels locked in a normal locking position, the operating end 171 of the first swivel 151 being snapped in place under a first ratchet member 53 while the operating end 172 of the second swivel 152 being snapped in place under a second ratchet member 54. These two ratchet members are a part of the locking device and are centrally placed in the upper portion of the locking device. These two ratchet members 53, 54 are arranged to arrest the swivels 151, 152 in said normal locking position.

Figure 6 shows in enlargement the locking device 40 for the installation box 10 in a position that corresponds to Figure 4 wherein the first swivel 151 is locked in a normal position under the first ratchet member 53 while the operating end 172 of the second swivel 152 is locked in a pressing position under the lowermost tooth of the side of the lock means 52.

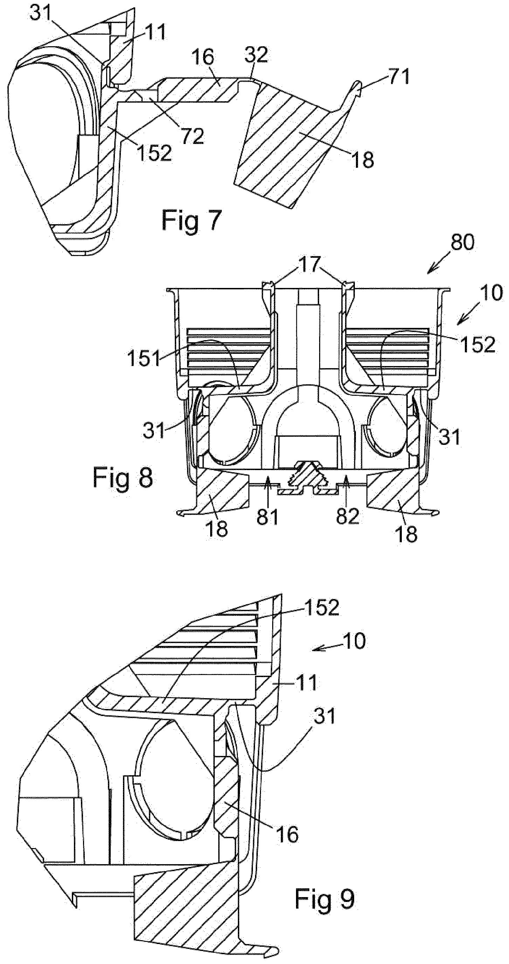

Figure 7 shows the second swivel 152 in a section of a partial enlargement from Figure 3 wherein the swivel is connected to the side wall 11 via the first pivot 31. The first pivot is essentially parallel to the side wall 11. The figure shows the bearing end 16 to which a mounting spacer 18 is connected via the second pivot 32. The mounting spacer 18 is provided with a hooked lock protuberance 71, which can be locked in a lock slot 72 when the mounting spacer 18 is rotated around the second pivot 32, i.e., counter-clockwise in the figure toward the side wall 11. The mounting spacer may, in this connection, be used by being activated by the rotation and locking of the lock protuberance 71 in the lock slot 72 or being inactive in the position shown in the figure depending on the thickness of the wall board.

Figure 8 shows a section through the installation box 10 with the swivels 151, 152 in the mounting position. In this position, each swivel is rotated so that the respective operating end 17 thereof extends up through the opening 80 of the box, wherein the installation box with the swivels can be installed in the opening of a wall board. The position shown of the swivels in the figure corresponds to the dashed position of the swivels in Figure 1. The mounting spacers 18 are in this position inserted toward the centre of the box in the swivel openings 81, 82, which are formed in the bottom and side wall of the box for the swivels and the mounting spacers thereof to be rotatable maximally around the pivots 31. As is seen in the figure, the mounting ends of the swivels are L-shaped so that they should be able to close the holes in the box by coinciding with both the side wall of the box and the bottom of the box when they have been rotated to the pressing positions thereof shown in Figure 2.

Figure 9 shows an enlargement from Figure 8 showing the swivel 152 in the mounting position, the first pivot 31 forming a right angle with the side wall 11 of the box 10, the bearing end 16 of the swivel being essentially parallel to the side wall 11 of the box.

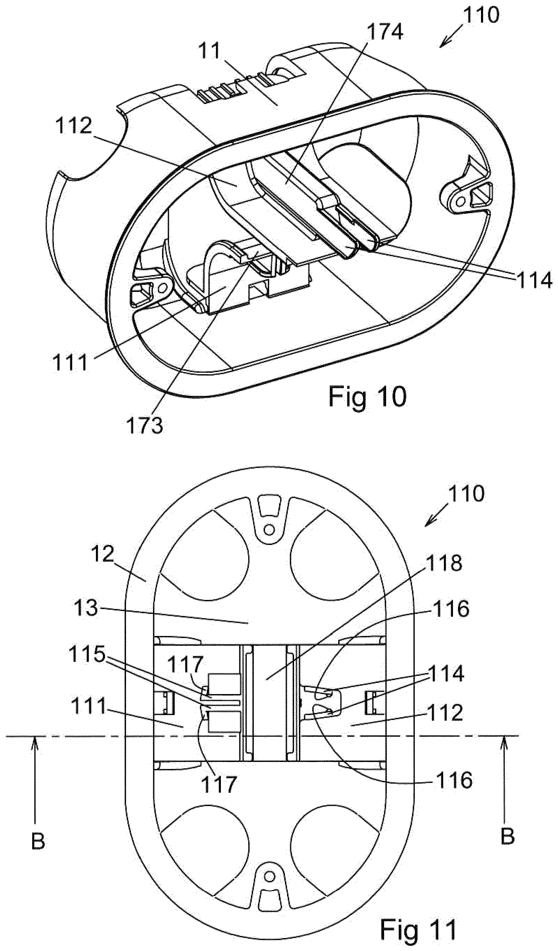

Figure 10 shows a mounting box 110 according to a second embodiment of the invention in a mounting position. The box is provided with a first swivel 111 and a second swivel 112, both of which are rotatably connected and integrated with the side wall 11 of the box. The first swivel 111 is provided with an operating end 173 intended to interlockably interact with the second swivel 112, which also is provided with an operating end 174, which is provided with elastic locking springs 114, projecting from the end in parallel and principally equally far, which upon a locking of the swivel 112 either may be pressed toward each other or be stretched from each other so as to, in doing so, interact with the first swivel 111.

Figure 11 shows the mounting box 110 from above with its bearing fold 12 and its bottom 13. The locking springs 114 of the second swivel 112 are arranged to interact with locking shackles 115 placed on the first swivel 111, which two locking elements 114, 115 upon the locking of the second swivel 112 against the first swivel 111 are rotated into a normal locking position. In this shown embodiment, the locking springs 114 are provided with a respective sliding pin 116 directed toward each other, which slide outside over the locking shackles 115 into locking under locking hooks 117 connected to the locking shackles 115. In this embodiment, only one locking position exists. When the box is in its mounting position according to the figure, its bottom 13 exhibits an opening 118 across the entire box. In the normal locking position, the swivels 111, 112 are rotated and the opening 118 is closed by the swivels and the box obtains an almost flat bottom 13 with the exception of said locking elements 114, 115.

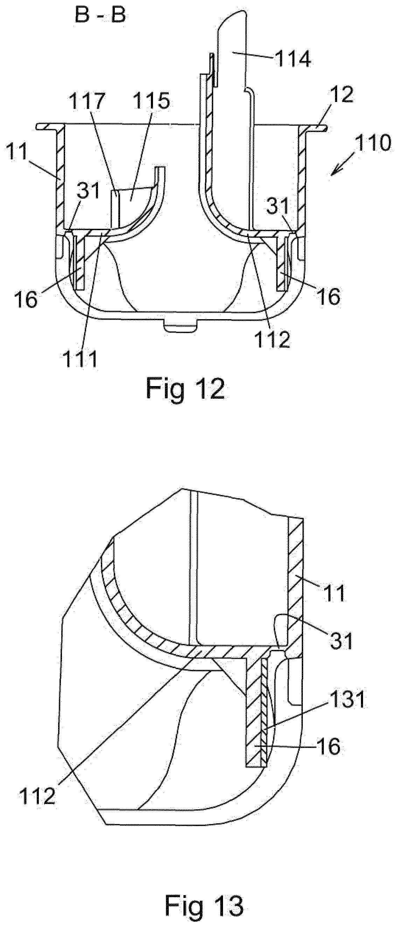

Figure 12 shows a section B-B from Figure 11, the first swivel 111 and second swivel 112 of the mounting box 110 being shown in their respective mounting positions. Both swivels are connected integratedly to the side wall 11 via a respective first pivot 31 around which the respective swivel is rotatable between a mounting position according to the figure and a normal locking position. The figure shows the first swivel 111 with the locking shackles 115 of one side and its locking hook 117. The figure also shows the second swivel 112 with the elastic locking spring 114 of one side. Each swivel 111, 112 is provided with a bearing end 16 arranged to, in a normal locking position, be folded out and pressed against the bearing fold 12 around a wall board like what has previously been shown in the embodiment according to Figure 1.

Figure 13 shows in enlargement from Figure 12 the second swivel 112 connected to the side wall 11 of the box via the first pivot 31. The bearing end 16 is provided with a mounting spacer 131 in the form of a shim of suitable thickness, which is selected with regard to the thickness of the wall board. The opposite side of the box is formed in the same way with regard to said pivot 31

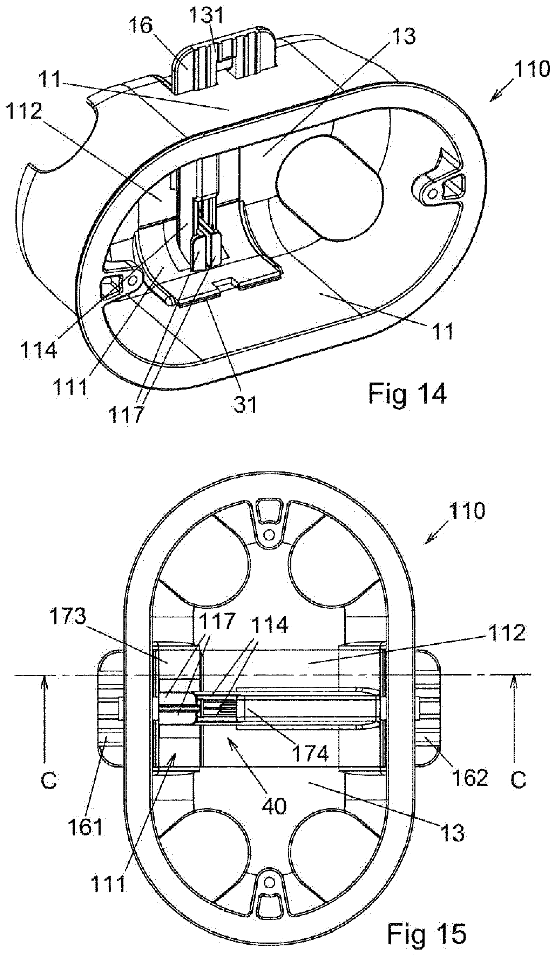

Figure 14 shows the installation box 110 according to Figure 10 in a locking position *viz.* in its normal locking position wherein the first swivel 111 is rotated downward around its first pivot 31 to a position wherein the locking hooks 117 are oriented essentially parallel to the bottom 13 of the box. In this position, also the second swivel 112 may be rotated downward around its first pivot and by its locking springs 114 be snapped outside over the locking hooks 117 into an interlocking of the two swivels 111, 112. Even if the embodiment according to Figure 14 shows that the locking springs 114 are snapped outside over the locking hooks 117, the invention also comprises embodiments wherein the locking springs are squeezed together and snap on the inside of locking hooks directed toward each other.

In this normal locking position, the two swivels constitute parts of the bottom 13 and side walls 11 of the installation box so that the box becomes whole, wherein screws, washers, and the like cannot fall through openings, slots, and grooves in the box. In this position, the bearing end 16 of the second swivel 112 is shown in the normal locking position, the bearing end 16 being directed essentially 90° outward from the side wall 11 of the box. Figure 14 also shows that the bearing end 16 is provided with a knurled mounting spacer 131.

Figure 15 shows the installation box 110 according to Figure 14 from above with the first swivel 111 and the second swivel 112 lowered and connected into a normal locking position wherein the bearing end 161 of the first swivel 111 extends perpendicularly outward from the side wall of the box and wherein the bearing end 162 of the second swivel 112 extends perpendicularly outward from the side wall of the box in the opposite direction. The operating end 173 of the first swivel 111 and the operating end 174 of the second swivel 112 exhibit a locking device 40, which aims at locking the swivels 111, 112 in relation to the installation box 110. The locking springs 114 of the second swivel 112 have in the figure been snapped over the locking hooks 117 of the first swivel 111 into an interlocking of the swivels and thereby a locking of their movement in relation to the installation box 110. As is seen in the figure, the second swivel 112 has closed the opening 118, see Figure 11, in such a way that the swivel 112 is located flush with the bottom 13 of the installation box in this normal locking position.

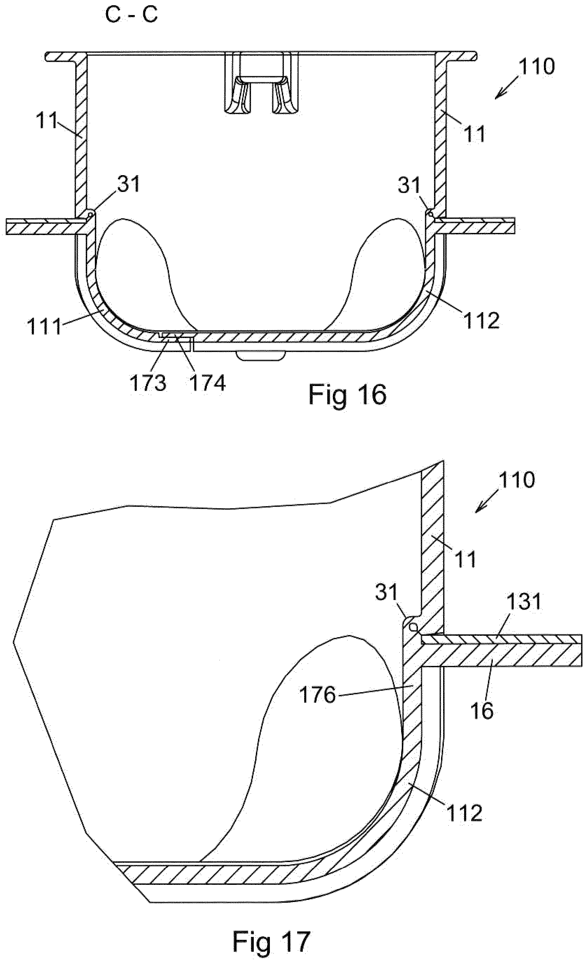

Figure 16 shows the section C-C from Figure 15 wherein it is seen that the operating end 174 of the second swivel 112 overlaps the operating end 173 of the first swivel on the inside of the installation box 110. Furthermore, it is seen in the figure that the two swivels 111, 112 are formed in the same piece of material as the rest of the installation box 110 and are connected/integrated with the side walls 11 of the box by the first pivot 31.

Figure 17 shows an enlargement of a portion of the installation box 110 from Figure 16 wherein the second swivel 112 is connected to the side wall 11 via the first pivot 31. In contrast to the position shown in Figure 13, wherein the swivel 112, and thereby the pivot 31, is in its position of rest and assumes an angle of 90° outward from the side wall 11, the swivel 112 in Figure 17 is maximally rotated around the pivot 31, the swivel pivot 31 having been flexed 90° in relation to the side wall 11 so that the swivel portion 176 closest to the pivot 31 is principally parallel to the side wall 11. The pivot according to this shown embodiment may, within the scope of the invention, be formed so that the flexing may exceed 90°, wherein a further pressing of the bearing end 16 and possibly the mounting spacer 131 can be accomplished against a wall board. Such a further pressing implies a further developed locking device between the swivels, which allows such a further pressing in a locked position. The opposite side of the box is formed in the same way with regard to said pivot 31.

## Claims

1. Installation box (10, 110) intended for electrical installations, which box comprises at least one side wall (11) the upper edge of which is provided with a bearing fold (12) and a bottom (13) connected to the lower portion of the side wall (11) and that the installation box (10, 110) is provided with at least two swivels (15, 111, 112, 151, 152) which individually are provided with a bearing end (16) and an operating end (17, 171, 172, 173, 174), each swivel (15, 111, 112, 151, 152) being integrated with the side wall (11) by a first pivot (31) on which the swivel (15, 111, 112, 151, 152) is rotatable at least between a mounting position and a locking position, the pivot (31) being placed at a distance from said two ends (16, 17, 171, 172, 173, 174) of the swivel (15, 111, 112, 151, 152), **characterized in that** said pivot (31) is located between said two ends of the swivel and that each swivel (15, 111, 112, 151, 152) is provided with locking means (21, 114, 115) locking the operating swivel end of the respective swivel, by lowering the two operating ends by a snap fit either to a locking device (40) or to each other in a position that they are located flush with the bottom (13) so as to form a whole bottom when the swivels are situated in the locking position, in relation to the installation box in a bearing position wherein the bearing end (16) of the swivel is directed principally 90° outward from said side wall (11) in the locking position and **in that** the operating swivel ends (17, 171, 172, 173, 174) are a part of the bottom (13) of the box in the locking position and **in that** the operating swivel ends (17, 171, 172, 173, 174) each are a part of the wall of the box as well when the swivels (15, 111, 112, 151, 152) are situated in the locking position.

2. Installation box according to claim 1, **characterized in that** the locking device (40) comprises at least one first lock means (51, 52, 53, 54, 114) interacting with at least the operating end (171, 173) of the first swivel (151, 111) for the locking of the swivel (151, 111) in said bearing position.

3. Installation box according to claim 2, **characterized in that** a second lock means (117) is placed on the operating end (173) of the first swivel (111).

4. Installation box according to claim 3, **characterized in that** the first lock means of the operating end (174) of the second swivel (112) is formed as two elastic locking springs (114), which are stretchable to be inserted under at least one lock edge (117) of said first swivel (111).

5. Installation box according to claim 2, **characterized in that** the first lock means (51, 52, 53, 54) is placed in said bottom (13) and is provided with at least one snap edge (53, 54) formed to interact with the operating end (171, 172) of each swivel (151, 152).

6. Installation box according to claim 5, **characterized in that** the first lock means (51, 52) is formed with a plurality of snap edges oriented in the direction of travel of the respective swivel (151, 152) so that the operating end (171, 172) of a swivel can be locked in several steps.

7. Installation box according to claim 6, **characterized in that** the snap edges of the first lock means are oriented in a stepped way in the bottom (13) of the box.

8. Installation box according to any one of claims 1-7, **characterized in that** the portion of the respective operating ends (17, 171, 172, 173, 174) of the swivels (15, 111, 112, 151, 152) closest to said pivot (31) is located flush with the side wall (11) of the box for the interaction with the side wall (11) so as to form an entire side wall when the swivels are situated in the locking position.

9. Installation box according to any one of claims 1-8, **characterized in that** the respective bearing end (16, 161, 162) of the swivels (15, 111, 112, 151, 152) is provided with a mounting spacer (18, 131).

10. Installation box according to claim 9, **characterized in that** the mounting spacer (18) is integrated with the swivel (15) by a second pivot (32) on which the mounting spacer (18) is rotatable between a depth position and a shallow position.

11. Installation box according to claim 10, **characterized in that** said second pivot (32) is oriented parallel to said first pivot (31).

12. Installation box according to any one of claims 10-11, **characterized in that** the mounting spacer (18) can be attached by snap action in the shallow position.

## Patentansprüche

1. Installationsgehäuse (10, 110), das für elektrische Anlagen bestimmt ist, wobei das Gehäuse wenigstens eine Seitenwand (11), deren oberer Rand mit einem Tragfalz (12) versehen ist, und einen Boden (13) umfasst, der mit dem unteren Abschnitt der Seitenwand (11) verbunden ist, und wobei das Installationsgehäuse (10, 110) mit wenigstens zwei Drehteilen (15, 111, 112, 151, 152) versehen ist, die jeweils mit einem tragenden Ende (16) und einem Arbeitsende (17, 171, 172, 173, 174) versehen sind, wobei jedes Drehteil (15, 111, 112, 151, 152) über eine erste Gelenkverbindung (31), an der das Drehteil (15, 111, 112, 151, 152) wenigstens zwischen einer Befestigungsstellung und einer Verriegelungsstellung drehbar ist, in der Seitenwand (11) integriert ist, wobei sich die Gelenkverbindung (31) in einem Abstand von den zwei Enden (16, 17, 171, 172, 173, 174) des Drehteils (15, 111, 112, 151, 152) befindet, **dadurch gekennzeichnet, dass** die Gelenkverbindung (31) zwischen den zwei Enden des Drehteils festgelegt ist und dass jedes Drehteil (15, 111, 112, 151, 152) mit Verriegelungsmitteln (21, 114, 115) versehen ist, die das Drehteilarbeitsende des entsprechenden Drehteils verriegeln, indem sie die zwei Arbeitsenden durch eine Schnappverbindung entweder mit einer Verriegelungsvorrichtung (40) oder miteinander in eine Stellung absenken, in der sie bündig mit dem Boden (13) abschließen, um einen Gesamtboden zu bilden, wenn sich die Drehteile in der Verriegelungsstellung, in Bezug auf das Installationsgehäuse in einer tragenden Stellung befinden, wobei das tragende Ende (16) des Drehteils in der Verriegelungsstellung grundsätzlich um 90° von der Seitenwand (11) nach außen gerichtet ist, und dass die Drehteilarbeitsenden (17, 171, 172, 173, 174) in der Verriegelungsstellung Teil des Bodens (13) des Gehäuses sind und dass die Drehteilarbeitsenden (17, 171, 172, 173, 174) jeweils auch Teil der Wand des Gehäuses sind, wenn sich die Drehteile (15, 111, 112, 151, 152) in der Verriegelungsstellung befinden.

2. Installationsgehäuse nach Anspruch 1, **dadurch gekennzeichnet, dass** die Verriegelungsvorrichtung (40) wenigstens ein erstes Riegelmittel (51, 52, 53, 54, 114) umfasst, das wenigstens mit dem Arbeitsende (171, 173) des ersten Drehteils (151, 111) zusammenwirkt, um das Drehteil (151, 111) in der tragenden Stellung zu verriegeln.

3. Installationsgehäuse nach Anspruch 2, **dadurch gekennzeichnet, dass** sich ein zweites Riegelmittel (117) an dem Arbeitsende (173) des ersten Drehteils (111) befindet.

4. Installationsgehäuse nach Anspruch 3, **dadurch gekennzeichnet, dass** das erste Riegelmittel des Arbeitsendes (174) des zweiten Drehteils (112) als zwei elastische Verriegelungsfedern (114) ausgebildet ist, die so dehnbar sind, dass sie unter wenigstens einem Riegelrand (117) des ersten Drehteils (111) eingesetzt werden.

5. Installationsgehäuse nach Anspruch 2, **dadurch gekennzeichnet, dass** sich das erste Riegelmittel (51, 52, 53, 54) in dem Boden (13) befindet und mit wenigstens einem Schnapprand (53, 54) versehen ist, der so ausgebildet ist, dass er mit dem Arbeitsende (171, 172) jedes Drehteils (151, 152) zusammenwirkt.

6. Installationsgehäuse nach Anspruch 5, **dadurch gekennzeichnet, dass** das erste Riegelmittel (51, 52) mit einer Vielzahl von Schnapprändern ausgebildet ist, die in der Bewegungsrichtung des entsprechenden Drehteils (151, 152) ausgerichtet sind, so dass das Arbeitsende (171, 172) eines Drehteils in mehreren Schritten verriegelt werden kann.

7. Installationsgehäuse nach Anspruch 6, **dadurch gekennzeichnet, dass** die Schnappränder des ersten Riegelmittels auf abgestufte Weise in dem Boden (13) des Gehäuses ausgerichtet sind.

8. Installationsgehäuse nach einem der Ansprüche 1 bis 7, **dadurch gekennzeichnet, dass** der der Gelenkverbindung (31) am nächsten gelegene Abschnitt der entsprechenden Arbeitsenden (17, 171, 172, 173, 174) der Drehteile (15, 111, 112, 151, 152) bündig mit der Seitenwand (11) des Gehäuses zum Zusammenwirken mit der Seitenwand (11) abschließt, um eine gesamte Seitenwand zu bilden, wenn sich die Drehteile in der Verriegelungsstellung befinden.

9. Installationsgehäuse nach einem der Ansprüche 1 bis 8, **dadurch gekennzeichnet, dass** das entsprechende tragende Ende (16, 161, 162) der Drehteile (15, 111, 112, 151, 152) mit einem Befestigungsabstandshalter (18, 131) versehen ist.

10. Installationsgehäuse nach Anspruch 9, **dadurch gekennzeichnet, dass** der Befestigungsabstandshalter (18) über eine zweite Gelenkverbindung (32), an der der Befestigungsabstandshalter (18) zwischen einer tiefen Stellung und einer flachen Stellung drehbar ist, in dem Drehteil (15) integriert ist.

11. Installationsgehäuse nach Anspruch 10, **dadurch gekennzeichnet, dass** die zweite Gelenkverbindung (32) parallel zu der ersten Gelenkverbindung (31) ausgerichtet ist.

12. Installationsgehäuse nach einem der Ansprüche 10 bis 11, **dadurch gekennzeichnet, dass** der Befestigungsabstandshalter (18) über eine Schnappfunktion in der flachen Stellung angebracht werden kann.

## Revendications

1. Boîte d'installation (10, 110) destinée à des installations électriques, ladite boîte comprenant au moins une paroi latérale (11) dont le bord supérieur est muni d'un pli d'appui (12) et d'un fond (13) relié à la partie inférieure de la paroi latérale (11) et la boîte d'installation (10, 110) étant munie d'au moins deux pivots (15, 111, 112, 151, 152) qui sont munis individuellement d'une extrémité d'appui (16) et d'une extrémité opérationnelle (17, 171, 172, 173, 174), chaque pivot (15, 111, 112, 151, 152) étant intégré à la paroi latérale (11) par un premier tourillon (31) sur lequel le pivot (15, 111, 112, 151, 152) peut tourner au moins entre une position de montage et une position de verrouillage, le tourillon (31) étant placé à une distance desdites deux extrémités (16, 17, 171, 172, 173, 174) du pivot (15, 111, 112, 151, 152) et **caractérisée en ce que** ledit tourillon (31) est situé entre lesdites deux extrémités du pivot et **en ce que** chaque pivot (15, 111, 112, 151, 152) est muni d'un moyen de verrouillage (21, 114, 115) verrouillant l'extrémité de pivot opérationnelle du pivot respectif, en abaissant les deux extrémités opérationnelles par encliquetage soit sur un dispositif de verrouillage (40), soit l'une par rapport à l'autre dans une position où elles sont situées de niveau avec le fond (13) de sorte à former un fond entier lorsque les pivots sont situés dans la position de verrouillage, par rapport à la boîte d'installation dans une position d'appui dans laquelle l'extrémité d'appui (16) du pivot est dirigée principalement à 90° vers l'extérieur à partir de ladite paroi latérale (11) dans la position de verrouillage et **en ce que** les extrémités de pivot opérationnelles (17, 171, 172, 173, 174) font partie du fond (13) de la boîte dans la position de verrouillage et **en ce que** les extrémités de pivot opérationnelles (17, 171, 172, 173, 174) font chacune partie de la paroi de la boîte également lorsque les pivots (15, 111, 112, 151, 152) sont situés dans la position de verrouillage.

2. Boîte d'installation selon la revendication 1, **caractérisée en ce que** le dispositif de verrouillage (40) comprend au moins un premier moyen de verrouillage (51, 52, 53, 54, 114) interagissant avec au moins l'extrémité opérationnelle (171, 173) du premier pivot (151, 111) pour le verrouillage du pivot (151, 111) dans ladite position d'appui.

3. Boîte d'installation selon la revendication 2, **caractérisée en ce qu'**un second moyen de verrouillage (117) est placé sur l'extrémité opérationnelle (173) du premier pivot (111).

4. Boîte d'installation selon la revendication 3, **caractérisée en ce que** le premier moyen de verrouillage de l'extrémité opérationnelle (174) du second pivot (112) est formé sous la forme de deux ressorts de verrouillage élastiques (114), qui sont extensibles pour être insérés sous au moins un bord de verrouillage (117) dudit premier pivot (111).

5. Boîte d'installation selon la revendication 2, **caractérisée en ce que** le premier moyen de verrouillage (51, 52, 53, 54) est placé dans ledit fond (13) et est pourvu d'au moins un bord d'encliquetage (53, 54) formé pour interagir avec l'extrémité opérationnelle (171, 172) de chaque pivot (151, 152).

6. Boîte d'installation selon la revendication 5, **caractérisée en ce que** le premier moyen de verrouillage (51, 52) est formé d'une pluralité de bords d'encliquetage orientés dans la direction de déplacement du pivot (151, 152) respectif de sorte que l'extrémité opérationnelle (171, 172) d'un pivot puisse être verrouillée en plusieurs étapes.

7. Boîte d'installation selon la revendication 6, **caractérisée en ce que** les bords d'encliquetage du premier moyen de verrouillage sont orientés de manière étagée dans le fond (13) de la boîte.

8. Boîte d'installation selon l'une quelconque des revendications 1 à 7, **caractérisée en ce que** la partie des extrémités opérationnelles (17, 171, 172, 173, 174) respectives des pivots (15, 111, 112, 151, 152) les plus proches dudit tourillon (31) est située de niveau avec la paroi latérale (11) de la boîte pour l'interaction avec la paroi latérale (11) de sorte à former une paroi latérale entière lorsque les pivots sont situés dans la position de verrouillage.

9. Boîte d'installation selon l'une quelconque des revendications 1 à 8, **caractérisée en ce que** l'extrémité d'appui (16, 161, 162) respective des pivots (15, 111, 112, 151, 152) est munie d'une entretoise de montage (18, 131) .

10. Boîte d'installation selon la revendication 9, **caractérisée en ce que** l'entretoise de montage (18) est intégrée avec le pivot (15) par un second tourillon (32) sur lequel l'entretoise de montage (18) peut tourner entre une position profonde et une position peu profonde.

11. Boîte d'installation selon la revendication 10, **caractérisée en ce que** ledit second tourillon (32) est orienté parallèlement audit premier tourillon (31).

12. Boîte d'installation selon l'une quelconque des revendications 10 et 11, **caractérisée en ce que** l'entretoise de montage (18) peut être fixée par encliquetage dans la position peu profonde.
